# EUROPEAN PATENT APPLICATION

(11) **EP 1 434 044 A2**
(43) Date of publication of application: **30.06.2004**
(21) Application number: 03028743.7
(22) Date of filing: 12.12.2003
(51) Int. Cl.: G01M 3/22

(54) **Double walled vessels for odorant containments**

(30) Priority: 16.12.2002 US 321032
(71) Applicant: AIR PRODUCTS AND CHEMICALS, INC., Allentown, PA 18195-1501 (US)
(72) Inventor: Puri, Pushpinder Singh, Emmaus, PA 18049 (US)
(74) Representative: Kador & Partner

(57) **Abstract**

An apparatus for detecting a leak of a fluid from a first vessel having an outer surface includes a second vessel and an odorant material. The second vessel has an outer surface and an inner surface spaced apart from and surrounding the outer surface of the first vessel, thereby forming an annulus between the outer surface of the first vessel and the inner surface of the second vessel. The odorant material is disposed in at least a portion of the annulus, at least a portion of the odorant material having at least one detectable odor.

## Description

### BACKGROUND OF THE INVENTION

The present invention relates to fluid leak detection, and in particular to the leak detection of gases by odor generated by adding odiferous materials to the gases.

With the advent of the fuel cell technology and a drive for clean fuel, hydrogen gas is emerging as a leading candidate for the fuel of choice. In addition to the benefit of being oxidizable in an emission free manner, hydrogen may be obtained from an abundant, renewable, resource, water.

For hydrogen to become a consumer fuel for automobile and domestic power generation, safety is paramount. Although safe handling and use of hydrogen is well understood, wamings are needed to alert against any leaks. Hydrogen sensors are commercially available but are not considered to be an absolute safeguard against leaks due to their potential for malfunctioning, change of air currents, etc. Human senses, in particular, the sense of smell, are considered to be the ultimate safeguard against leaks. Since hydrogen is an odorless gas, odorants are preferably incorporated in hydrogen for easy leak detection. A review of the codes, standards, regulations, recommendations, and certifications on the safety of gaseous fuels is addressed in a report, Proc. U.S. DOE Hydrogen Program Rev. (1996), Vol. 2, pages 569-604.

Odorization of gases for leak detection is well known in the natural gas and petroleum gas industries. For example, a paper by M.J. Usher (*Proc. Int. Scho. Hydrocarbon Meas.* 73^{rd}, pages 743-48 (1998)) reviews the history, application, compounds, and safety practices in selecting and applying odorants in the natural gas industry. Mixing small quantities of odorants with gases is a substantially universal practice in natural and petroleum gases. For example, a paper by I. Katuran (*Proc. Int. Sch. Hydrocarbon Meas.,* 64^{th}, pages 325-30 (1989)) reports on natural gas odorants, their safety and handling precautions, handling techniques, and methods of adding odorants to gases.

Nearly all of the methods for odorization of natural and petroleum gases consist of metering a certain amount of the odorant into a gas stream to a level where detection can be made by the human sense of smell. Natural gas for public gas supplies typically contains 5-10 mg of sulfur per cubic meter of gas. However, odorants for hydrogen used as an energy source for fuel cells have unique requirements which must be met. This is because most of the commercial odorants used in gas leak detection act as poisons for the catalysts used in hydrogen based fuel cells, most specifically for the PEM (polymer electrolyte membrane or proton exchange membrane) fuel cells. Chemical compounds based on mixtures of acrylic acid and nitrogen compounds have been adopted to achieve a sulfur-free odorization of a gas. See, for example, WO 00/11120 (PCT/EP99/05639) by Haarmann & Reimer GmbH. However, these formulations are either ineffective or do not have general acceptance by users. Also, in the use of natural gas and other petroleum gases for hydrogen generation for fuel cell applications, sulfur free natural or petroleum gases are needed, or else a desulfurization step must be incorporated in the reforming process, which adds further cost to hydrogen generation.

The PEM fuel cells are sulfur intolerant because sulfur compounds poison the noble metal catalysts used in these fuel cells. If sulfur-containing odorants are used, it would be necessary to remove sulfur containing materials, like mercaptan odorants, from the feed gas using materials like zinc oxide. The sulfur containing materials, like thiophenes, cannot be removed by zinc oxide and may require a hydrodesulfurization process, using hydrogen gas, to remove sulfur. This all will add to the cost of the process.

A further complexity for hydrogen fuel comes from the nature of the hydrogen flame propagation. When gases bum in air, their flames propagate upwards with greater ease than they propagate downwards. This is primarily due to the natural convection of hot burnt gases in an upward direction. For petroleum gases, propane and methane, the upward and downward propagating lean limits of combustion are approximately the same. However, for hydrogen, since they differ by a factor of 2.5 , the amount of odorant needed for leak detection in hydrogen could be > 2.5 times that needed for methane or propane. The higher quantity of the odorant needed for hydrogen odor detection further complicates the sulfur poisoning problems for hydrogen gas used in the PEM fuel cells.

In several other gas applications, particularly when gases are odorless, toxic, or are otherwise harmful, methods of leak detection using odiferous materials are also desirable. The gases included in this category are, for example, nitrogen, carbon monoxide, nitrogen trifluoride, ethylene oxide, carbon tetrafluoride and other perfluoro gases.

Several other issues also have been encountered in the odorization of the natural and petroleum gases. The key ones are (1) hydrocarbon masking the odor of the odiferous materials, (2) adsorption of the odorant on the storage vessel and pipe walls, (3) reaction of the odorants with low molecular weight mercaptans (naturally occurring in the gas), (4) condensation of the odorants in the gas storage vessel and pipes, and (5) physical scrubbing of the mercaptans from the gas with liquids (associated with the natural gas).

Today, approximately twenty-five different blends are used as natural gas odorants. Of these twenty-five blends, seven blends are more prevalent. Almost all of the odorant agents are sulfur compounds, *e*.*g*., mercaptans (tetrabutyl mercaptan, isopropyl mercaptan, normal propyl mercaptan, secondary butyl mercaptans, ethyl mercaptans, normal butyl mercaptan, etc.), thiophenes (tetrahydrothiophene), sulfides (dimethyl sulfide, methyl ethyl sulfide), etc.

In addition to the pungent odors of these chemicals, the chemicals used are also expected to have certain other attributes, such as low vapor pressure (high boiling point), low freezing point, low specific gravity so that they are fully dispersed in the gas, and appropriate thermal properties (*e.g.*, they will not freeze at appropriate temperatures and will not cause over odorization in the hot weather). The general quality requirements, as specified for sulfur containing odorants in ISO/DIS 13734, are: (1) a cloud point of less than -30 degrees Celsius, (2) a boiling point of less than 130 degrees Celsius, and (3) evaporation residue of less than 0.2 %.

Requirements for odorants further will likely include an odorant concentration high enough to allow detection with a fuel gas concentration of 1/5 the lean limit of combustion. These requirements exist for natural gas (SAE J 1616, NFPA 52-1992) and petroleum gas (NFPA 58-1989).

It is desired to have a method and system for the use of odorants in gas storage and delivery systems in which the odorants are not dispersed in the bulk gas but are accessible only to the leaking gas streams, thus leaving the gas uncontaminated and making leak detection by smell viable without adding odorants in the entire gas stream.

It is further desired to have a system and method for the use of odorants in gas storage and delivery systems which can be used for gas leak detection with the use of an odorant(s), where the odorant(s) do not contaminate the bulk gas stream.

It is also desired to have such a system and method which overcomes the difficulties and disadvantages of the prior art to provide better and more advantageous results.

### BRIEF SUMMARY OF THE INVENTION

The present invention is an apparatus and a method for detecting a leak of a fluid from a vessel. There are several embodiments of the apparatus and the method, as discussed below. In a number of the embodiments, the fluid is a pressurized gas.

With regard to the apparatus of the present invention, a first embodiment is an apparatus for detecting a leak of a fluid from a first vessel having an outer surface. The apparatus includes a second vessel and an odorant material. The second vessel has an outer surface and an inner surface spaced apart from and surrounding the outer surface of the first vessel, thereby forming an annulus between the outer surface of the first vessel and the inner surface of the second vessel. The odorant material is disposed in at least a portion of the annulus, at least a portion of the odorant material having at least one detectable odor.

There are several variations of this first embodiment of the apparatus. In one variation, a flow of the fluid flows from the first vessel to the annulus, whereby the flow of the fluid picks up and transmits a portion of the odorant material into an atmosphere surrounding the outer surface of the second vessel.

In another variation, the detectable odor is detectable by a sense of smell of a living being. In yet another variation, the fluid is hydrogen. In another variation, at least a portion of the fluid is a gas stored and/or transported in the first vessel. In a variant of that variation, at least a portion of the gas is at or above an ambient pressure.

In another variation of the first embodiment of the apparatus, at least a portion of the odorant material is selected from a group consisting of mercaptans (tetrabutyl mercaptan, isopropyl mercaptan, normal propyl mercaptan, secondary butyl mercaptans, ethyl mercaptans, normal butyl mercaptan), thiophenes (tetrahydrothiophene), sulfides (dimethyl sulfide, methyl ethyl sulfide), and combinations thereof, and odorants selected from a group consisting of derivatives of acrylic acid, alkyl ethers of C₄-C₇, carboxylic acids, and combinations thereof.

A second embodiment of the apparatus is similar to the first embodiment but includes a pressure relief device in fluid communication with the annulus. In a variation of the second embodiment, a flow of the fluid flows from the first vessel to the annulus where the fluid has an annulus pressure, whereby the flow of the fluid picks up and transmits a portion of the odorant material into an atmosphere surrounding the outer surface of the second vessel via the pressure relief device when the annulus pressure reaches or exceeds a predetermined pressure.

A third embodiment of the apparatus of the present invention is an apparatus for detecting a leak of a fluid from a vessel having a first surface. The apparatus includes an annular space and an odorant material. The annular space is between the first surface and a second surface spaced apart from the first surface. The odorant material is disposed in at least a portion of the annular space, at least a portion of the odorant material having at least one detectable odor.

There are several variations of the third embodiment of the apparatus. In one variation, the second surface surrounds at least a substantial portion of the first surface. In another variation, the first surface surrounds at least a substantial portion of the first surface. In another variation, the first surface surrounds at least a substantial portion of the second surface. In yet another variation, a flow of a fluid flows through the first surface and the second surface, whereby the fluid picks up and transmits a portion of the odorant material from the annular space into an atmosphere surrounding the vessel.

A fourth embodiment of the apparatus is similar to the third embodiment but includes a pressure release device in fluid communication with the annular space. In a variation of the fourth embodiment, a flow of the fluid flows from the annular space where the fluid has an annulus pressure, whereby the flow of the fluid picks up and transmits a portion of the odorant material into an atmosphere surrounding the vessel via the pressure relief device when the annulus pressure reaches a predetermined pressure.

A fifth embodiment of the apparatus of the present invention is an apparatus for detecting a leak of a pressurized gas from a first vessel having an outer surface. The apparatus includes a second vessel, an odorant material, and a pressure relief device. The second vessel has an outer surface and an inner surface spaced apart from and surrounding the outer surface of the first vessel, thereby forming an annulus between the outer surface of the first vessel and the inner surface of the second vessel. The odorant material is disposed in at least a portion of the annulus, at least a portion of the odorant material having at least one detectable odor. The pressure relief device is in fluid communication with the annulus, wherein a flow of the pressurized gas flows from the first vessel to the annulus where the pressurized gas has an annulus pressure, whereby the flow of the pressurized gas picks up and transmits a portion of the odorant material into an atmosphere surrounding the outer surface of the second vessel via the pressure relief device when the annulus pressure reaches or exceeds a predetermined pressure.

With regard to the method of the present invention, there also are several embodiments. The first embodiment is a method for detecting a flow of a fluid from a first vessel having an outer surface. The method includes multiple steps. The first step is to provide a second vessel having an outer surface and an inner surface spaced apart from and surrounding the outer surface of the first vessel, thereby forming an annulus between the outer surface of the first vessel and the inner surface of the second vessel. The second step is to provide an odorant material disposed in at least a portion of the annulus, at least a portion of the odorant material having at least one detectable odor. The third step is to provide a pressure relief device in fluid communication with the annulus. The fourth step is to transmit the flow of the fluid from the first vessel to the annulus where the fluid has an annulus pressure, whereby the flow of the fluid picks up and transmits a portion of the odorant material having the detectable odor into an atmosphere surrounding the outer surface of the second vessel via the pressure relief device when the annulus pressure reaches or exceeds a predetermined pressure. The fifth step is to detect the detectable odor in the surrounding atmosphere.

There are several variations of the first embodiment of the method. In one variation, the detectable odor is detectable by a sense of smell of a living being. In another variation the fluid is hydrogen. In yet another variation, at least a portion of the fluid is a gas stored and/or transported in the first vessel. In a variant of that variation, at least a portion of the gas is at or above an ambient pressure.

In another variation of the method, at least a portion of the odorant material is selected from a group consisting of mercaptans (tetrabutyl mercaptan, isopropyl mercaptan, normal propyl mercaptan, secondary butyl mercaptans, ethyl mercaptans, normal butyl mercaptan), thiophenes (tetrahydrothiophene, sulfides (dimethyl sulfide, methyl ethyl sulfide), and combinations thereof, and odorants selected from a group consisting of derivatives of acrylic acid, alkyl ethers of C₄-C₇, carboxylic acids, and combinations thereof.

Another embodiment is a method for detecting a flow of a pressurized gas leaking from a first vessel having an outer surface. The method includes multiple steps. The first step is to provide a second vessel having an outer surface and an inner surface spaced apart from and surrounding the outer surface of the vessel, thereby forming an annulus between the outer surface of the first vessel and the inner surface of the second vessel. The second step is to provide an odorant material disposed in at least a portion of the annulus, at least a portion of the odorant material having at least one detectable odor. The third step is to provide a pressure relief device in fluid communication with the annulus. The fourth step is to transmit the flow of the pressurized gas from the first vessel to the annulus where the pressurized gas has an annulus pressure, whereby the flow of the pressurized gas picks up and transmits a portion of the odorant material having the detectable odor into an atmosphere surrounding the outer surface of the second vessel via the pressure relief device when the annulus pressure reaches or exceeds a predetermined pressure. The fifth step is to detect the detectable odor in the surrounding atmosphere.

### BRIEF DESCRIPTION OF THE DRAWINGS

FIG. 1 is a simplified, partial, cross-sectional view of a vessel in accordance one embodiment of the present invention; and
FIG. 2 is a simplified, partial, cross-sectional view of the vessel of FIG. 1 showing a leak point of gas through the vessel wall.

### DETAILED DESCRIPTION OF THE INVENTION

The present invention is directed to a system and method which can be used for gas leak detection with the use of odorants, where the odorants are not mixed with the bulk gas stream.

Specifically, a system and method of leak detection for non-odorous, flammable and toxic gases is provided in which odorants are not mixed in the bulk gas but are placed in the path of the gas leak. In the system and method of the present invention, odorants are filled in the gap between the outer walls and an additional barrier of the gas storage vessels or piping. The odorants are filled in the gap by pumping of the odorant materials as such or in diluted form. Alternately, the odorants are sorbed in an appropriate solid carrier, which is then filled in the annulus space.

For purposes of the present invention, the term "vessel" is intended to include any vessel or other piping or piping system capable of containing a pressurized gas. The term "appurtenance" is intended to include any fittings, valves, meters, and any other device or object attached to the vessel which forms a part of the total gas storage space.

In the event of a gas leak from the gas vessel or piping, gas will travel from the bulk storage within the vessel to the gas leak spot due to the gas pressure gradient. For the leaking gas to travel from the bulk storage to the leak spot, it must permeate through the annulus which contains the odorant material. As the gas passes through the odorant material, it carries with it a portion of the odorant material and a mixture of the gas and the odorant material is released from the leak spot. As a result, the gas leak may be detected by the smell of the odorant. Thus, a gas leak may be detected without contaminating the bulk gas supply. The odorant material volatility is such that it has a certain vapor pressure at the storage temperature and it diffuses into the leaking gas to impart to it a detectable amount of the odorant. Alternatively, the odorant can be physically carried (entrained) by the high pressure leaking gas to impart in the gas a detectable amount of odorant. Both of these mechanisms may prevail at any given time when gas is leaking from the vessel.

Double walled vessels or containers are used in industry to contain leaks from primary vessels or containers. The strength of the secondary containers in those cases is generally comparable to the primary containers. A double wall container can be made much less expensive if the secondary container is much more inferior in strength compared to the primary container. The hazard of doing this is that the gas leak may not be contained. However, if the annulus is filled with an odorant, in the event of a gas leak and failure of the secondary container, the leak can be detected by smell.

In one embodiment of the present invention, primary and secondary containers are used and the annulus between the primary container and the secondary container is filled with a pre-determined quantity of an odorant material. Odorants tend to condense in high pressure and low temperature storage and phase separate from the gas. Therefore, the odorant material also can be encapsulated or sorbed on an appropriate media. The secondary container is equipped with an appropriate pressure release device, such as a rupture disc, pressure release valve, etc. When a leak occurs in the primary vessel, gas travels to the secondary vessel, where the leaking gas mixes with the odorant material. The leaking gas builds up pressure in the annulus and upon reaching a certain pre-set pressure, the relief device releases the gas laced with the odorant material. A leak is thus detectable by smell.

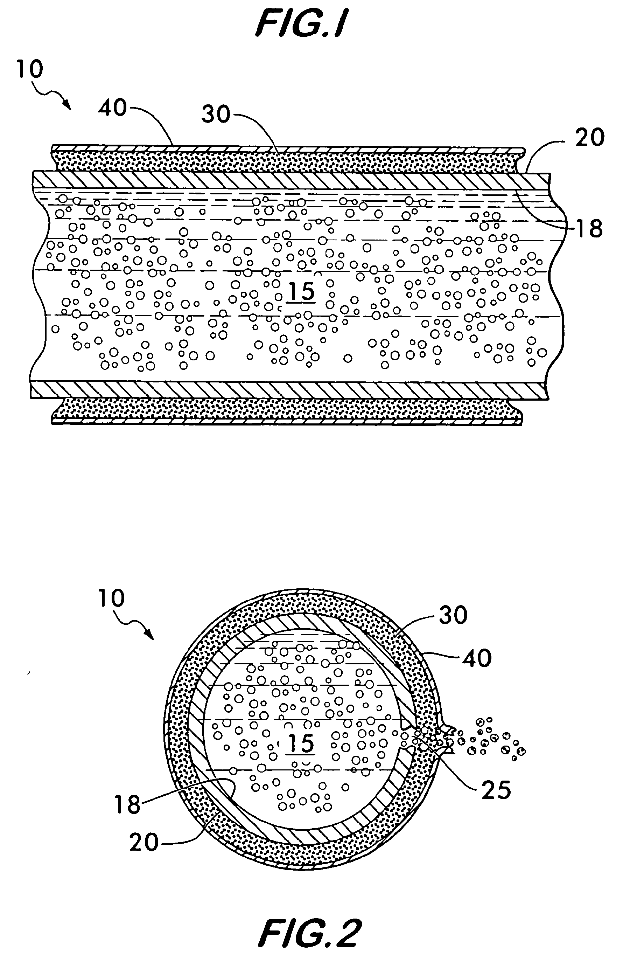

Referring now to the drawings, FIG.1 shows a simplified portion of a cross section of a primary vessel 10 (or piping) storing gas 15 in accordance with one embodiment of the present invention. The vessel 10 has an inner wall 18 and an outer wall 20 surrounded by an odorant layer 30. The odorant layer 30 fully covers the outer wall 20, *i*.*e*., the entire exterior of the vessel 10. A secondary vessel 40 surrounds the odorant layer 30.

As shown in FIG. 2, when a leak develops in the primary vessel 10, the stored gas 15 rushes through the leak site orifice 25 from the inner wall 18, *i*.*e*., the high-pressure side of the primary vessel 10, to the outer wall 20, *i.e.*, the low-pressure side of the primary vessel 10. Since the leaking gas 15 has to permeate through the odorant layer 30 and then pass by bursting through the secondary vessel 40, the leaking gas carries with it an appropriate amount of the odorant layer 30, thus imparting an odor in the leaking gas.

The invention will be illustrated in more detail with reference to the following Examples, but it should be understood that the present invention is not limited thereto.

### EXAMPLES

Example 1: An inner gas pressure vessel made of metal, reinforced plastic or other structural material is lined externally with an outer vessel made of metal, glass, fiberglass, plastic, or other structural material capable of holding a lower gas pressure, *e.g.*, in the range of about 5 to 100 psig, than the inner pressure vessel itself. The gap between the outer and the inner vessels is filled with one or more odorant materials or their blends. The barrier layer of the inner vessel material therefore separates the gas in the vessel and the odorant material. Generally, the odoriferous materials such as: mercaptans (tetrabutyl mercaptan, isopropyl mercaptan, normal propyl mercaptan, secondary butyl mercaptans, ethyl mercaptans, normal butyl mercaptan, etc.), thiophenes (tetrahydrothiophene), sulfides (dimethyl sulfide, methyl ethyl sulfide), and the like, and their combinations, and odorants selected from a group consisting of derivatives of acrylic acid, alkyl ethers of C₄-C₇, carboxylic acids, and combinations thereof, are used. In the event of a gas leak, gas must pass through the gap between the inner and the outer vessel in which the odorant material resides. The leaking gas will mix with the odorant material imparting to it an odorant. The outer pressure vessel is equipped with a rupture disk or a pressure relief valve at a predetermined setting between about 5 to 100-psig. The leaking gas builds up pressure in the annulus, and when this pressure exceeds a pre-set relief pressure, the rupture disk or the pressure relief valve releases gases laced with the odoriferous materials have odors detectable by the human sense of smell.

Example 2. A nonodorant gas, such as nitrogen, helium, argon, carbon dioxide, etc., dilutes the odorant placed in the annulus of Example 1.

Example 3. A nonodorant liquid, such as water, dilutes the odorant in Example 1.

Example 4. A solid sorbent or adsorbent is used to store the odorant in Example 1. The odorant material is sorbed on an appropriate substrate in which it exists in a condensate form held by the capillary forces. The sorbed material is placed in the annulus of the gas vessel in a predetermined quantity. At the gas storage temperature and pressure, the odorant material releases a certain amount of the odorant to the leaking gas providing it with the needed concentration of the odorant material to generate an odor in the leaking gas. The adsorbent materials can be from natural sources, such as cellulosic materials, carbons and clays, or they can be synthetic sorbents, such as polymers and zeolites, etc. The type and amount of the odorant on these adsorbents can be determined on the basis of the desired odorant concentration in the leaking gas. For the sulfur containing odorants, such a concentration is generally about 1-10 mg S/liter or more of gas.

Example 5. The odorant material is microencapsulated in an appropriate media and is filled in the gap of Example 1. The encapsulation of the odorant material can be done by the known techniques in the literature. The organic and inorganic membrane encapsulation methods are taught by the various coating methods. The art of forming polymeric semi-permeable membranes and microporous membranes is well documented in text books, for example, in R.E. Kesting and A.K. Fritzsche, *Polymeric Gas Separation Membranes,* Wiley (1983) and in R.E. Kesting, *Synthetic Polymer Membranes,* Wiley (1985). The art of making microporous inorganic membranes is well documented, for example, in C.J. Brinker and G.W. Scherer, *Sol-Gel Science,* Academic Press (1990). The thin encapsulating layer is formed on the odorant, for example, using a rubbery polymer such as polydimethyl siloxane amongst other rubbery materials and glassy polymers such as polyimides, polysulfones, polyamides, polyarylates, polyolefins, and the like. The art of making coatings of the rubbery materials and their cross-linking is taught by J.H.Henis and M.K. Tripodi in U.S. Patent No. 4,230,463 and described in a paper published in the *Journal of Membrane Science,* 8, 233 (1981). Example 6. A gas-containing pipe made of metal, reinforced plastic, or other structural material is lined with an outer coating or lining made of metal, glass, fiberglass, plastic, or other structural materials. The gap between the outer coating and the inner vessel is filled with one or more odorant materials or their blends. The barrier layer of the inner coating or lining material therefore separates the gas in the vessel and the odorant material. In the event of a gas leak, gas must pass from the vessel walls through the gap in which the odorant material resides to the outer lining. The gas mixes with the odorant material and hence any leaks from the outer lining is detectable by the human sense of smell.

Example 7. A nonodorant gas such as nitrogen dilutes the odorant in Example 6.

Example 8. A nonodorant liquid such as water dilutes the odorant in Example 6.

Example 9. A solid sorbent or adsorbent is used as diluents for the odorant in Example 6. The odorant material is sorbed on an appropriate substrate in which it exists in a condensate form held by the capillary forces. The sorbed material is placed in the gap between the inner vessel and outer lining in a predetermined quantity. The leaking gas passing through the annulus picks up sufficient odorant to impart an odor to it.

Example 10. The odorant material is microencapsulated in an appropriate media and is filled in the gap of Example 6. The encapsulation of the odorant material can be done by the known techniques in the literature cited in Example 5.

While various embodiments of the invention have been described in detail with reference to the drawings and the specific examples above, it will be apparent to one skilled in the art that various changes and modifications can be made to those embodiments, drawings, and examples without departing from the spirit and scope of the invention as defined in the claims which follow.

## Claims

1. An apparatus for detecting a leak of a fluid from a first vessel having an outer surface, comprising:
a second vessel having an outer surface and an inner surface spaced apart from and surrounding the outer surface of the first vessel, thereby forming an annulus between the outer surface of the first vessel and the inner surface of the second vessel; and
an odorant material disposed in at least a portion of the annulus, at least a portion of the odorant material having at least one detectable odor.

2. An apparatus as in claim 1, further comprising a pressure relief device in fluid communication with the annulus.

3. An apparatus as in claim 1, wherein a flow of the fluid flows from the first vessel to the annulus, whereby the flow of the fluid picks up and transmits a portion of the odorant material into an atmosphere surrounding the outer surface of the second vessel.

4. An apparatus as in claim 1, wherein the detectable odor is detectable by a sense of smell of a living being.

5. An apparatus as in claim 1, wherein the fluid is hydrogen.

6. An apparatus as in claim 1, wherein at least a portion of the fluid is a gas stored and/or transported in the first vessel.

7. An apparatus as in claim 6, wherein at least a portion of the gas is at or above an ambient pressure.

8. An apparatus as in claim 2, wherein a flow of the fluid flows from the first vessel to the annulus where the fluid has an annulus pressure, whereby the flow of the fluid picks up and transmits a portion of the odorant material into an atmosphere surrounding the outer surface of the second vessel via the pressure relief device when the annulus pressure reaches or exceeds a predetermined pressure.

9. An apparatus as in claim 1, wherein at least a portion of the odorant material is selected from a group consisting of mercaptans (tetrabutyl mercaptan, isopropyl mercaptan, normal propyl mercaptan, secondary butyl mercaptans, ethyl mercaptans, normal butyl mercaptan), thiophenes (tetrahydrothiophene), sulfides (dimethyl sulfide, methyl ethyl sulfide), and combinations thereof, and odorants selected from a group consisting of derivatives of acrylic acid, alkyl ethers of C₄-C₇, carboxylic acids, and combinations thereof.

10. An apparatus for detecting a leak of a fluid from a vessel having a first surface, comprising:
an annular space between the first surface and a second surface spaced apart from the first surface; and
an odorant material disposed in at least a portion of the annular space, at least a portion of the odorant material having at least one detectable odor.

11. An apparatus as in claim 10, wherein the second surface surrounds at least a substantial portion of the first surface.

12. An apparatus as in claim 10, wherein the first surface surrounds at least a substantial portion of the second surface.

13. An apparatus as in claim 10, further comprising a pressure relief device in fluid communication with the annular space.

14. An apparatus as in claim 10, wherein a flow of a fluid flows through the first surface and the second surface, whereby the fluid picks up and transmits a portion of the odorant material from the annular space into an atmosphere surrounding the vessel.

15. An apparatus as in claim 13, wherein a flow of the fluid flows from the annular space where the fluid has an annulus pressure, whereby the flow of the fluid picks up and transmits a portion of the odorant material into an atmosphere surrounding the vessel via the pressure relief device when the annulus pressure reaches a predetermined pressure.

16. An apparatus for detecting a leak of a pressurized gas from a first vessel having an outer surface, comprising:
a second vessel having an outer surface and an inner surface spaced apart from and surrounding the outer surface of the first vessel, thereby forming an annulus between the outer surface of the first vessel and the inner surface of the second vessel;
an odorant material disposed in at least a portion of the annulus, at least a portion of the odorant material having at least one detectable odor; and
a pressure relief device in fluid communication with the annulus, wherein a flow of the pressurized gas flows from the first vessel to the annulus where the pressurized gas has an annulus pressure, whereby the flow of the pressurized gas picks up and transmits a portion of the odorant material into an atmosphere surrounding the outer surface of the second vessel via the pressure relief device when the annulus pressure reaches or exceeds a predetermined pressure.

17. A method for detecting a flow of a fluid from a first vessel having an outer surface, comprising the steps of:
providing a second vessel having an outer surface and an inner surface spaced apart from and surrounding the outer surface of the first vessel, thereby forming an annulus between the outer surface of the first vessel and the inner surface of the second vessel;
providing an odorant material disposed in at least a portion of the annulus, at least a portion of the odorant material having at least one detectable odor;
providing a pressure relief device in fluid communication with the annulus;
transmitting the flow of the fluid from the first vessel to the annulus where the fluid has an annulus pressure, whereby the flow of the fluid picks up and transmits a portion of the odorant material having the detectable odor into an atmosphere surrounding the outer surface of the second vessel via the pressure relief device when the annulus pressure reaches or exceeds a predetermined pressure; and
detecting the detectable odor in the surrounding atmosphere.

18. A method as in claim 17, wherein the detectable odor is detectable by a sense of smell of a living being.

19. A method as in claim 17, wherein the fluid is hydrogen.

20. A method as in claim 17, wherein at least a portion of the fluid is a gas stored and/or transported in the first vessel.

21. A method as in claim 20, wherein at least a portion of the gas is at or above an ambient pressure.

22. A method as in claim 17, wherein at least a portion of the odorant material is selected from a group consisting of mercaptans (tetrabutyl mercaptan, isopropyl mercaptan, normal propyl mercaptan, secondary butyl mercaptans, ethyl mercaptans, normal butyl mercaptan), thiophenes (tetrahydrothiophene, sulfides (dimethyl sulfide, methyl ethyl sulfide), and combinations thereof, and odorants selected from a group consisting of derivatives of acrylic acid, alkyl ethers of C₄-C₇, carboxylic acids, and combinations thereof.

23. A method for detecting a flow of a pressurized gas leaking from a first vessel having an outer surface, comprising the steps of:
providing a second vessel having an outer surface and an inner surface spaced apart from and surrounding the outer surface of the first vessel, thereby forming an annulus between the outer surface of the first vessel and the inner surface of the second vessel;
providing an odorant material disposed in at least a portion of the annulus, at least a portion of the odorant material having at least one detectable odor;
providing a pressure relief device in fluid communication with the annulus;
transmitting the flow of the pressured gas from the first vessel to the annulus where the pressurized gas has an annulus pressure, whereby the flow of the pressurized gas picks up and transmits a portion of the odorant material having the detectable odor into an atmosphere surrounding the outer surface of the second vessel via the pressure relief device when the annulus pressure reaches or exceeds a predetermined pressure; and
detecting the detectable odor in the surrounding atmosphere.
